# EUROPÄISCHE PATENTSCHRIFT

(11) **EP 4 182 106 B1**
(45) Veröffentlichungstag und Bekanntmachung des Hinweises auf die Patenterteilung: **03.12.2025**
(21) Anmeldenummer: 21749531.6
(22) Anmeldetag: 29.06.2021
(51) Int. Cl.: B21G 3/20, B44C 3/00, F16B 15/00

(54) **VERARBEITUNG VON NÄGELN OHNE KÖPFE**
PROCESSING NAILS WITHOUT HEADS
TRAITEMENT DE CLOUS SANS TÊTES

(30) Priorität: 15.07.2020 DE 102020118709
(43) Veröffentlichungstag der Anmeldung: 24.05.2023
(73) Patentinhaber: Wirestyle GmbH, 76137 Karlsruhe (DE)
(72) Erfinder: GALL, André, 76137 Karlsruhe (DE)
(74) Vertreter: Avon, Philipp Marcel
(86) Internationale Anmeldenummer: PCT/EP2021/067817
(87) Internationale Veröffentlichungsnummer: WO 2022/012916

(56) Entgegenhaltungen:
- US-A- 1 440 579
- US-A- 315 070
- US-A- 4 964 774
- US-A- 6 149 436
- SEEJANEDRILL: "How to Use a Pin Nailer: Beginner Tutorial", 24 September 2015 (2015-09-24), XP093202780, Retrieved from the Internet <URL:https://www.youtube.com/watch?v=pNrmZwGhAwI&ab_channel=seejanedrill> [retrieved on 20240906]

## Beschreibung

Darstellungen mit Nägeln.

### HINTERGRUND DER ERFINDUNG

Im Stand der Technik sind Herstellungsverfahren für Stringart-Bilder bekannt, bei denen Nägel in die Oberfläche einer Platte eingebracht werden (z.B. eingehämmert, eingepresst oder in vorgebohrte Löcher gesteckt) und anschließend ein oder mehrere Fäden zwischen diesen Nägeln hindurchgezogen werden. Das Platzieren der Nägel und Fäden kann dabei sowohl von Hand wie auch automatisiert mit Hilfe eines computergesteuerten, mechatronischen Systems erfolgen. Alle bereits bekannten Verfahren haben gemeinsam, dass Nägel mit Köpfen verwendet werden. Die Köpfe haben typischerweise die Funktion, einen Schutz gegen unbeabsichtigtes Abrutschen der Fäden zu bieten, wie es bei einer Herstellung von Hand auftreten kann.

Das Dokument US 20180361550 A1 zeigt eine Vorrichtung zum Erstellen von Stringart-Bildern, bei der durch eine erste Hülse Nägel mit Köpfen in eine Platte gerammt werden und durch eine zweite Hülse ein Faden geführt wird, der um die Nägel geführt werden kann.

Das Dokument US 4,964,774 beschreibt ein Befestigungselement, das für Holzteile genutzt werden kann. In dem Dokument US 6,149,436 werden Stringart-Modelle dargesetllt, die komplexe visuelle Effekte erzielen können. Das Dokument US 315,070 beschreibt ein Kaltpressverfahren, um eine Endlosfolge von Stäben herzustellen, deren Durchmesser über die Länge variiert.

### ZUSAMMENFASSUNG DER ERFINDUNG

Das Platzieren und Umfädeln der einzelnen Nägel ist im Stand der Technik sehr kompliziert, da die einzelnen Nägel gegriffen und in die Platte eingerammt werden müssen. Danach, in einem weiteren Arbeitsschritt ist der Nagel mit einem Faden mit anderen Nägeln zu verbinden.

Eine Aufgabe der Erfindung ist es daher, ein Verfahren zur Herstellung einer Stringart-Darstellung und ein Produkt, insbesondere einen Nagel, hierzu zur Verfügung zu stellen, sodass eine schnelle und effiziente Herstellung eines Stringart-Bildes ermöglicht wird.

Als Ausführungsform der Erfindung wird ein Verfahren zur Herstellung einer Platte als Stringart-Darstellung zur Verfügung gestellt, umfassend: eine Mehrzahl an Nägeln, wobei die Nägel keine Verdickung an einem Ende in Form eines Kopfes aufweisen, umfassend die Schritte: Zuführen eines Endlosdrahtes, Rammen des Endlosdrahtes in die Platte und Ablängen des Endlosdrahtes, sodass sich einer der Nägel ergibt, wobei der Endlosdraht von einer Vorschubeinheit in die Oberfläche der Platte eingestochen und danach von einer Schneidvorrichtung abgetrennt, also abgelängt, wird, wobei beim Ablängen des Endlosdrahtes eine Spitze an dem Nagel derart ausgebildet wird, dass der Nagel einfacher in die Platte gerammt werden kann.

Bei der erfinderischen Vorrichtung werden Nägel ohne Verdickungen in Form von Köpfen eingesetzt. Hierdurch kann eine "maschinelle" Herstellung der Stringart-Bilder ermöglicht werden. Insbesondere wird mit einer erfinderischen Vorrichtung ein Endlosdraht in einzelne Nägel, allerdings ohne Kopf, abgelängt und in eine Platte gerammt. Diese Nägel können mit Fäden verbunden werden, wodurch sich ein visueller Eindruck ergibt. Hierbei wird der endlose Draht von einer Vorschubeinheit in die Oberfläche der Platte eingestochen und danach von einer Schneidvorrichtung der erfinderischen Vorrichtung abgetrennt, also abgelängt. Nach einer Repositionierung der Vorschubeinheit zur nächsten Nagelposition wird der Vorgang wiederholt.

Vorteilhaft bei dem erfinderischen Verfahren ist, dass keine einzelnen Nägel gegriffen und platziert werden. Erfindungsgemäß können daher deutlich schneller Stringart-Bilder erzeugt werden. Zusätzlich ist Endlosdraht billiger als einzelne Nägel, wodurch sich die Herstellkosten verringern lassen.

Als Ausführungsform wird eine Platte als Stringart-Darstellung zur Verfügung gestellt, umfassend: einen oder eine Mehrzahl an Nägeln.

Vorteilhaft bei der erfinderischen Methode ist außerdem, dass wegen der fehlenden Köpfe die Fäden besser sichtbar sind. Ein Verdecken des Fadens in Nagelnähe durch Köpfe der Nägel entfällt.

Als Ausführungsform wird ein Verfahren zur Herstellung einer Platte zur Verfügung gestellt, umfassend die Schritte: Zuführen eines Endlosdrahtes, Rammen des Endlosdrahtes in die Platte und Ablängen des Endlosdrahtes, sodass sich ein Nagel ergibt.

Als Ausführungsform wird eine Stringart-Darstellung zur Verfügung gestellt, umfassend: mindestens zwei Nägel und eine Platte.

Gemäß einer außerdem beispielhaften Ausführungsform wird ein Nagel zur Verfügung gestellt, wobei der Nagel an einem Ende eine Spitze zum Einrammen in eine Platte aufweist.

Durch die Möglichkeit des Ablängens, also das Durchtrennen des Endlosdrahtes bei einer gewünschten Position, sodass ein Nagel entsteht, der eine vorgegebene Länge aufweist, kann Endlosdraht statt einzelner Nägel verwendet werden. Hierdurch kann eine effiziente Herstellung eines Stringart-Bildes ermöglicht werden.

Gemäß einer beispielhaften Ausführungsform wird ein Nagel zur Verfügung gestellt, wobei der Nagel an einem Ende eine Abflachung zur Verringerung der Verletzungsgefahr aufweist.

In einer noch weiteren erfindungsgemäßen Ausführungsform wird eine Platte zur Verfügung gestellt, wobei die Platte weiter umfasst: einen Faden, der mindestens zwei Nägel miteinander verbindet.

Gemäß einer beispielhaften Ausführungsform wird ein Verfahren zur Verfügung gestellt, wobei beim Ablängen des Endlosdrahtes eine Spitze an dem Endlosdraht derart ausgebildet wird, dass der Endlosdraht einfacher in die Platte gerammt werden kann.

Als eine Idee der Erfindung kann angesehen werden, eine Vorrichtung zur Verfügung zu stellen, mit der Stringart-Darstellungen schnell und effizient hergestellt werden können. Hierzu werden mit der erfinderischen Vorrichtung ein angespitzter Endlosdraht in eine Platte, die die Grundlage für das Stringart-Bild darstellt, gestochen. Nachdem der Endlosdraht in der Grundlage eingestochen wurde, wird der Endlosdraht abgeschnitten, also abgelängt. Hierdurch ergibt sich, dass Nägel ohne Köpfe in die Strinagrt-Darstellung eingestochen werden. Diese Nägel können durch Fäden verbunden werden, wodurch sich der optische Eindruck des Stringart-Bildes ergibt. Vorteilhafterweise fehlen den Nägeln die Köpfe, wodurch der visuelle Eindruck nicht durch Köpfe von Nägeln gestört wird.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigt
Fig. 1 eine erfindungsgemäße Vorrichtung zur Herstellung eines Nagels ohne Kopf, wobei die Vorrichtung diesen Nagel 2 bzw. Drahtstift in eine Platte 1 einsetzt und
Fig. 2 eine erfindungsgemäße Stringart-Darstellung.

### DETAILLIERTE BESCHREIBUNG BEISPIELHAFTER AUSFÜHRUNGSFORMEN

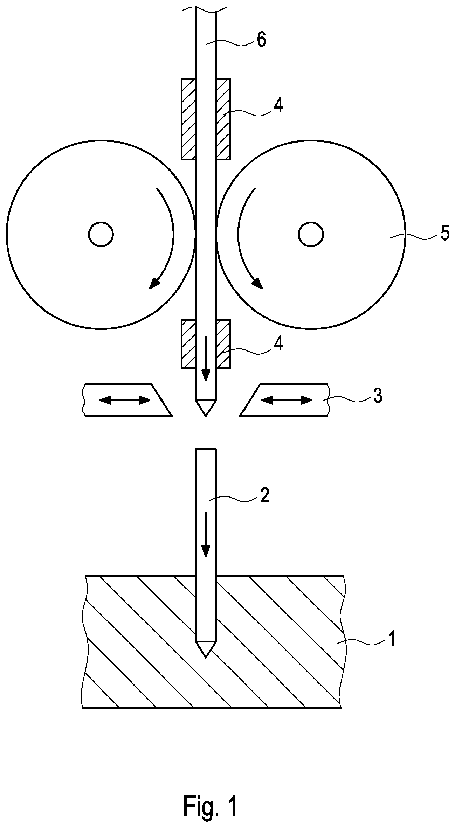

Fig. 1 zeigt eine Vorrichtung zum Erstellen einer Stringart-Darstellung mit Nägeln 2, wobei die Nägel 2 in eine Platte 1 gerammt werden. Zur Erstellung der Darstellung wird ein Endlosdraht 6 verwendet, wobei durch Vorschubrollen 5 der Endlosdraht 6 der Vorrichtung zugeführt wird. Der Endlosdraht 6 wird an einer Schneidevorrichtung 3 vorbeigeführt. Vorteilhafterweise weist die Schneidvorrichtung 3 eine schräge Spitze auf, sodass der Anfang des Endlosdrahtes 6 derart verformt wird, dass er eine Spitze aufweist, die das Eindringen in die Platte 1 erleichtert. Durch Führungshülsen 4 kann der Endlosdraht 6 der Schneidvorrichtung 3 geführt werden. Die erfindungsgemäße Vorrichtung dient insbesondere dazu, Stringartbilder herzustellen.

Die Vorrichtung zur Herstellung der Stringart-Darstellung umfasst einen Endlosdraht 6 mit einem Durchmesser von ca. 0.5 - 2 mm, der von zwei drehbar gelagerten Vorschubrollen 5 eingeklemmt wird. Der Draht 6 besteht z.B. aus Metall wie z.B. Eisen, Stahl, Aluminium, Messing, Titan oder aus Kunststoff oder einem sonstigen Werkstoff, dessen Oberfläche zusammen in Kombination mit dem zu verwendenden Faden eine ausreichende Haftreibung erzeugt, um ein Abrutschen des Fadens zu verhindern. Durch die Vorschubrollen 5 wird der Draht 6 nach unten geschoben (Die Richtung ist bezogen auf die Zeichnungsebene). Eine Schneidvorrichtung 3 schneidet den Draht 6 ab, sobald dieser eine gewünschte Länge (ca. 5 - 30 mm) nach unten geschoben wurde und sich in die Platte 1 gebohrt hat. Der Drahtstift 2 wird in der Platte 1 durch die Reibkraft zwischen Drahtstift 2 und verdrängtem Material der Platte 1 fixiert. Die Platte 1 besteht z.B. aus Kunststoffschaum, Karton, Holz oder einem Verbundmaterial wie z.B. Sandwichplatten, welche z.B. aus einem Laminat aus geschäumtem Kunststoff und Deckeln aus Papier, Pappe oder Kunststoff bestehen. Die Dicke der Platten 1 beträgt etwa 5 bis 20 mm.

Die Schneiden der Schneidvorrichtung 3 können sich wie bei einer Zange aufeinander zu bewegen und stoßen aneinander, bevor sie wieder voneinander entfernt werden. Sie sind bevorzugt so gestaltet, dass die entstehenden Drahtstifte 2 unten spitz zulaufen und oben eine Abflachung aufweist, um besser in die Platte 1 gesteckt werden zu können. Hierdurch wird außerdem eine Verletzungsgefahr durch die Drahtstifte 2 vermieden. Denkbar sind auch andere Formen der Schneidbacken der Schneidvorrichtung 3, wie z.B. stumpfe Backen einer Schere, die aneinander vorbei gleiten um den Draht 6 zu trennen.

Nach dem Schnittvorgang wird die Vorrichtung mit Hilfe eines verfahrbaren Arms oder eines 2-Achs Portals zur nächsten Nagelposition verschoben und der Vorgang wiederholt. Alternativ kann auch die Platte mechanisch verschoben werden und die Vorrichtung zum Zuführen und Einrammen des Endlosdrahtes ist ortsfest. In einer noch weiteren alternativen Ausführungsform wird sowohl die Platte als auch die Vorrichtung verschoben.

Das Produkt besteht aus einer Platte 1 mit Abmessungen von ca. 10 x 10 cm bis ca. 10 x 10 m und enthält eine Vielzahl von Nägeln bzw. Drahtstiften 2, ca. 100 bis 100.000 Stück. Die Nägel 2 sind in einem bestimmten Mindestabstand platziert, um das Fadenziehwerkzeug zwischen den Nägeln 2 verfahren zu können. Dieser Mindestabstand liegt bei ca. 1 bis 30 mm.

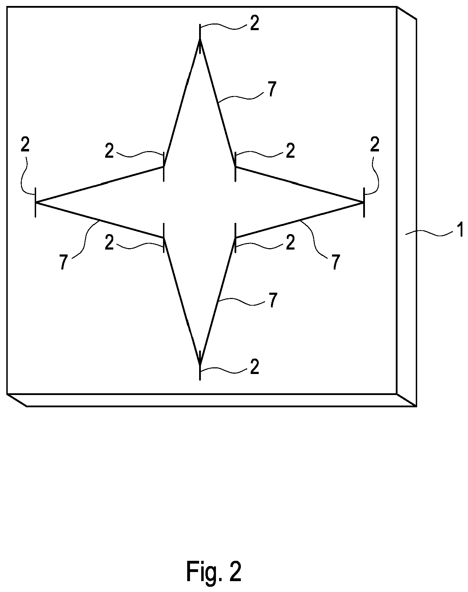

Fig. 2 zeigt eine Stringart-Darstellung mit Nägeln 2 und einem Faden 7, der jeweils zwei Nägel 2 miteinander verbindet.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Platte
- 2: Drahtstift/Nagel
- 3: Schneidvorrichtung
- 4: Führungshülse
- 5: Vorschubrolle
- 6: Endlosdraht
- 7: Faden

## Patentansprüche

1. Verfahren zur Herstellung einer Platte (1) als Stringart-Darstellung, umfassend:
eine Mehrzahl an Nägeln (2), wobei die Nägel (2) keine Verdickung an einem Ende in Form eines Kopfes aufweisen, umfassend die Schritte:
Zuführen eines Endlosdrahtes (6),
Rammen des Endlosdrahtes (6) in die Platte (1) und
Ablängen des Endlosdrahtes (6), sodass sich einer der Nägel (2) ergibt, wobei der Endlosdraht (6) von einer Vorschubeinheit in die Oberfläche der Platte (1) eingestochen und danach von einer Schneidvorrichtung (3) abgetrennt, also abgelängt, wird, wobei beim Ablängen des Endlosdrahtes (6) eine Spitze an dem Nagel (2) derart ausgebildet wird, dass der Nagel (2) einfacher in die Platte (1) gerammt werden kann.

## Claims

1. Method for manufacturing a panel (1) as a string art representation, comprising:
a plurality of nails (2), wherein the nails (2) do not have a thickening at one end in the form of a head, comprising the steps of:
feeding in an endless rod (6),
ramming the endless rod (6) into the panel (1) and
cutting the endless rod (6) to length so that one of the nails (2) is produced, wherein the endless rod (6) is pierced into the surface of the panel (1) by a feed unit and then severed, i.e. cut to length, by a cutting device (3), wherein, when the endless rod (6) is cut to length, a tip is formed on the nail (2) in such a way that the nail (2) can be rammed more easily into the panel (1).

## Revendications

1. Procédé pour la fabrication d'une plaque (1) en tant qu'affichage pour l'art des fils tendus, comprenant :
une pluralité de clous (2), dans lequel les clous (2) ne présentent pas de renflement à une extrémité sous la forme d'une tête, comprenant les étapes consistant à :
acheminer un fil continu (6),
enfoncer le fil continu (6) dans la plaque (1) et
couper à longueur le fil continu (6), de sorte que l'un des clous (2) est obtenu, dans lequel le fil continu (6) est introduit dans la surface de la plaque (1) par une unité d'avance et est ensuite séparé, c'est-à-dire coupé à longueur, par un dispositif de coupe (3), dans lequel, lors de la coupe à longueur du fil continu (6), une pointe est formée sur le clou (2), de telle sorte que le clou (2) peut être enfoncé plus facilement dans la plaque (1).
